# EUROPEAN PATENT SPECIFICATION

(11) **EP 4 379 229 B1**
(45) Date of publication and mention of the grant of the patent: **22.10.2025**
(21) Application number: 22210838.3
(22) Date of filing: 01.12.2022
(51) Int. Cl.: F16D 65/00

(54) **A BRAKE AIR THROUGH FLOW AND BRAKE DUST COLLECTOR SYSTEM FOR A BRAKE INSTALLATION, VEHICLE BRAKE SYSTEM AND METHOD FOR PURIFYING BRAKE AIR FROM A VEHICLE BRAKE SYSTEM**
BREMSLUFTDURCHFLUSS- UND BREMSSTAUBSAMMELSYSTEM FÜR EINE BREMSANLAGE, FAHRZEUGBREMSANLAGE UND VERFAHREN ZUR REINIGUNG VON BREMSLUFT AUS EINER FAHRZEUGBREMSANLAGE
SYSTÈME COLLECTEUR DE POUSSIÈRE DE FREINAGE ET DE FLUX D'AIR DE FREINAGE POUR UNE INSTALLATION DE FREINAGE, SYSTÈME DE FREINAGE DE VÉHICULE ET PROCÉDÉ DE PURIFICATION D'AIR DE FREINAGE

(43) Date of publication of application: 05.06.2024
(73) Proprietor: ZF CV Systems Global GmbH, 3006 Bern (CH)
(72) Inventor: STRZALA, Wieslaw, 46-220 Byczyna (PL)
(74) Representative: Ohlendorf, Henrike

(56) References cited:
- EP-A1- 3 995 715
- WO-A1-2019/243094
- WO-A1-2020/094950
- WO-A2-2020/183092
- KR-A- 20200 037 013

## Description

The present invention relates to a brake air through flow and brake dust collector system according to the preamble part of claim 1, which hereinafter is referred to a brake air system. The invention also leads to a vehicle brake system with a number of brake installations, each brake installation being assigned to a vehicle wheel at a vehicle axle having the brake air system. The invention also relates to a method for purifying brake air from a vehicle brake system with a number of brake installations, each brake installation being assigned to a vehicle wheel at a vehicle axle, the method operating the brake air through flow and brake dust collector system.

Surrounding pollution is known to be due to brake pad and rotor or disc dust particles. Brake pad and rotor or disc dust is not healthy for a human and in general for environment. It is important to eliminate or restrict emissions of brake pad and rotor or disc dust to environment. Generally known are brake dust collectors generally adapted to purify brake air from a brake installation in the general meaning of removing impurities, in particular adapted for separating and collecting dust particles, debris and the like impurities from the brake air flow and filtering the brake air flow. In particular, these aspects relate to a brake installation in form of a disc brake. For instance, in DE 20 2005 006 844, an apparatus for collecting debris in a filter fluidly connected in the vicinity of a brake installation is described. Purifying brake air in the following is to be understood as removing impurities like debris, dust and the like, which hereinafter is referred to by "particles" in a general sense.

Various solutions in art have been suggested to overcome deficiencies in purifying brake air from a brake installation and protect environment in a better way to prevent debris from a brake pad and/or a rotor or disc of a brake installation, in particular dust particles and the like to distribute in the surrounding of a brake installation of a vehicle brake system.

A more sophisticated approach to purify brake air from a brake installation as mentioned in the introduction has been suggested with a brake dust collector in WO 2020/183092 A2 which makes it possible to separate and collect heavy dust. In particular, the brake dust collector of WO 2020/183092 A2 proposes a brake air through flow system as mentioned in the introduction, wherein a separating device is described to receive --via a lower inlet-- an airflow laden with impurities, namely dust produced by pads of a brake assembly. The housing of the device contains a multi-cyclone cluster with cyclones distributed annularly and supplied tangentially by a central collector surmounting an axial duct communicating with the inlet. Said separating device is fluidly connected to the brake assembly and arranged in the immediate vicinity thereof.

Whilst this proposed solution follows already a good approach still nevertheless the construction thereof is suggested in a rather sophisticated way and due to the immediate vicinity to the brake assembly it is prone to certain restrictions in the immediate vicinity of the brake assembly; in particular impact and dirt of the immediate vicinity is detrimental to the functioning thereof. This is even more severe as the construction of the proposed separating device of WO 2020/183092 A2 is rather sophisticated and thus suffices therefrom as it is even more sensitive to impacts from of the immediate vicinity of the brake installation during operation of the vehicle. Then, further the partially complex and many parts complicate maintenance and serviceability.

Further attempts to improve these and the like approaches to purify brake air in a vehicle brake system have resulted in a still further teaching to improved integration of an assembly into the brake installation as such to purify brake air from the brake installation. Accordingly, DE 10 2017 201 736 A1 relates to a device for receiving brake dust particles which are produced during a braking process of a motor vehicle on the friction surface between a brake disc and at least one brake lining of a disc brake, having a particle collecting chamber arranged in the region of the disc brake and a channel for transporting the particles from the friction surface to the particle collecting chamber by means of an air flow. Therein, the particle collecting chamber is designed such that a separation of the particles from the airstream takes place therein, wherein the particle collection chamber has a cyclone structure for separating the particles from the air flow. In the device the brake dust collector is integrated into a disc brake installation of the vehicle. However, close proximity to the air disc brake limits solutions in dimension and application; further high temperatures may be detrimental to operation.

Further, the close proximity of brake installation and brake air through flow device in the up-to-date known solutions mentioned above, rely -- seemingly as an advantage-- on a passive air flow; still nevertheless this approach reveals to be not efficient. Thus, still further, it is desirable to avoid disadvantages of the known solutions of complex design, too many parts and inefficient operation. It is desirable to improve serviceability and improve efficiency of a brake air through flow system both for service and operation.

This is where the invention comes in, the object thereof is to provide an improved brake air through flow and brake dust collector system for a brake installation, a vehicle brake system, a vehicle and a method for purifying brake air, in particular to improve approaches as mentioned above according to at least one of the aspects mentioned above. In particular, it is an object of the invention to provide a brake air system, apparatus and method as mentioned herein before adapted for improved purifying of brake air whilst still keeping structure and operation of the system and apparatus practicably straight forward and stable.

The object is achieved --with regard to a first aspect of the invention-- by a brake air through flow and brake dust collector system for a brake installation, said brake air system being claimed in claim 1.

With regard to the first aspect of the invention, the object is also achieved by a vehicle brake system with a number of brake installations, each brake installation being assigned to a vehicle wheel at a vehicle axle, with a brake air through flow system of the invention.

The invention also leads to a vehicle of claim 11 with a vehicle brake system and/or a brake air through flow system of the invention. At the vehicle with a vehicle brake system, the device housing of the brake air through flow device is attached to a chassis of the vehicle at the distal environment distal from the brake installation.

The object is achieved --with regard to a second aspect of the invention-- by a method of claim 12 for purifying brake air from a vehicle brake system with a number of brake installations, each brake installation being assigned to a vehicle wheel at a vehicle axle, the method operating the brake air through flow and brake dust collector system.

The method is for purifying brake air from a vehicle brake system with a number of brake installations, each brake installation being assigned to a vehicle wheel at a vehicle axle, the method operating the brake air through flow and brake dust collector system. According to the invention the method comprises the steps of:
- generating a suction pressure to the brake air receivable from the brake air through flow device by at least one suction element to generate a propulsive brake air flow through the brake air through flow device and further to extend the suction pressure to the brake air receiving element in the vicinity of the brake installation,
- receiving brake air by a brake air receiving element in the vicinity of the brake installation and flow transport thereof to an environment distal from the brake installation by an air duct fluidly connectable to the brake installation,
- purifying the brake air in at least one brake air through flow device with a combination of a cyclone separator element, a collecting element and a filter element, said elements being arranged along a through flow downward sequence in a device housing, wherein the brake air through flow device separates and collects dust particles from the brake air flow and filters the brake air flow thereafter.

The invention starts from the consideration that for purifying brake air by means of a system is more favorable as compared to integrated devices as mentioned in the introduction. Also, the approach of the instant invention considers sophisticated and in particular integration of brake dust collectors as less favorable due to the disadvantages mentioned above.

Still nevertheless, the instant invention found, that a brake air through flow device with a combination of a cyclone separator element, a collecting element and a filter element as mentioned in the introduction is a good approach to provide a straight forward and stable serviceability and operation of a brake air through flow device in a flow system for purifying brake air in a vehicle brake system with a number of brake installations.

The invention has recognized that the system of a brake air through flow system should be provided with the brake air through flow device at a distal environment, whereas an air duct fluidly connectable to the brake installation for receiving brake air at a brake air receiving element is provided in the vicinity of a brake installation; thus a flow transport to said distal environment is provided.

This has an advantage in that in the distal environment the brake air through flow device is distant from impact near the brake installation. Thus, the brake air through flow device as such is protected from impact of dirt, temperature and shocks - further in a distal environment the brake air through flow device is arrangeable such that serviceability and maintenance is practicable in a straight-forward and easy way even during operation. Further, the invention in synergy thereof has recognized that, at the distal environment it is favorable to provide a suction element for generating a suction pressure to the brake air received from the brake air through flow device to generate a propulsive brake air flow through the brake air through flow device. Said suction element is further adapted to extend the suction pressure to the brake air at the brake installation. Thus, advantageously the system is adapted to provide an active air flow and the active air flow secures a safe and stable operation of the brake air through flow device within the brake air system of the invention.

Thus, the invention has recognized in an advantageous way as compared to the known solutions that a clear brake air through flow device in structure is easy to be serviced and still can provides superior reliable purifying operation for air brake when operated. Brake air purifying operation of the brake air system is based on an active air flow of brake air through the brake air through flow device and further extended at the brake installation. Said active air flow is generated by the suction element in generating a suction pressure to the brake air received from the brake air through flow device as a propulsive brake air flow. Thus, operation of the brake air through flow device implemented in said system is more reliable as compared to sophisticated and integrated solutions known in the art.

Advantages of the invention result from the comparingly small number of parts which contributes to serviceability. Also the provision of at least one suction element for generating a suction pressure to the brake air receivable from the brake air through flow device to generate a propulsive brake air flow through the brake air through flow device and further adapted to extend the suction pressure to the brake air receiving element in the vicinity of the brake installation has the advantage of a high efficiency and stable operation, which is due to said suction element; in other words the use of negative pressure generator.

Further advantageous developments of the invention are found in the dependent claims and indicate in detail advantageous possibilities to realize the concept described above within the scope of the object as well as with regard to further advantages for brake air system with a brake air through flow device for purifying brake air, in particular for separating and collecting particles, in particular particles from a brake pad and rotor, like dust particles or debris and other particulate impurities.

In a particular preferred approach it is possible to of use various negative pressure generators for said suction element. A kind of negative pressure can be generated by connection of the system, in particular the brake air through flow device to an intake manifold, connection to a compressor intake, fan or the like suction means.

Preferably the suction element partly or wholly is formed at the distal environment distal from the brake installation, the suction element comprising one or more of the suction means selected from the group consisting of:
- an air intake manifold of the vehicle,
- a compressor of the vehicle,
- a vehicle fan,
- a means of a pressure sink providing a lower pressure as compared to the pressure in the vicinity of the brake installation,
- a means for generating a venturi or chimney effect providing a lower pressure as compared to the pressure in the vicinity of the brake installation.

Preferably, the brake air through flow device has a single cyclone separator element and/or a single cyclone separator element assigned to the collecting element, in particular a single collecting element. In a particular preferred development, the device housing at least in parts, is formed by the brake air through flow device, wherein the housing in a sequential arrangement from bottom to top is formed by a collecting element, the cyclone separator element, the filter element and a lid, in particular wherein the lid and the collecting element are detachably from the housing in that the lid and the collecting element are adapted for re-assembly.

In particular, the brake air through flow device thus has the function of a particle separating and collecting device. It preferably comprises a detachable collector chamber, a housing with cone separation chamber for initial air cleaning and filtration chamber with filtering means for final air cleaning. The filtration chamber of the filter element preferably is enclosed by a lid. In a particular preferred development the brake air through flow device is manufactured from a 3D- printing process.

Thus, the brake air system is with superior advantage adapted for separating and collecting brake dust particles comprising duct directing the air from brake air to separating and collecting device.

According to the invention, the brake air through flow device has an intermediate volume, which is arranged between the cyclone separator element and the filter element, wherein
- said intermediate volume forms an open zone below the filter element, and
- the collecting element forms a drop zone below the cyclone separator element.

In a particular preferred development the intermediate volume provides a channel for fluid connection to the suction element such that the channel is arranged in a cross-flow configuration across a through pipe, wherein said through pipe is arranged in fluid connection between the cyclone separator element and the filter element, wherein the channel and the through pipe are pneumatically separated. Preferably air received from the filter element in the intermediate volume thus is sufficiently clean in view of the fact that said air has passed through the cyclone separator element, and by way of the through pipe, has been passed to the filter element and then through the filter element; thus least contamination of the air stays on the filter in the filter element.

Preferably, the device housing of the brake air through flow device further comprises:
- an inlet interface in fluid connection to the cyclone separator element and/or an outlet interface in fluid connection from the filter element, in particular wherein the intermediate volume is in fluid connection to the outlet interface,
- a mounting assembly for attachment of the housing to a vehicle.

Preferably, the mounting assembly is arranged in a conical section of the device housing assigned to the cyclone separator element, and/or the inlet interface is arranged in a conical section of the device housing assigned to the cyclone separator element and/or the outlet interface is arranged in a cylindrical section of the device housing assigned to an intermediate volume between cyclone separator element and filter element. This development takes advantage from an ease of filter exchange and dust collector emptying; this favors also an advantageous flexibility regarding assembly on the vehicle.

It should be understood that the concept of the brake air system can be realized in a vehicle brake system in various forms. Particular preferred is that a single brake air through flow device, in particular a single vehicle brake air system, is assigned to each of the brake installations separately.

Still also in another development a common assembly of a single or a number of brake air through flow devices is assigned to a partial number of or all of the brake installations of the vehicle, each brake installation being assigned to a vehicle wheel at a vehicle axle.

These and other aspects of the invention will be apparent from and elucidated with reference to the embodiments described hereinafter.

The embodiments of the invention are described in the following on the basis of the drawing in comparison with the state of the art, which is also partly illustrated. The latter is not necessarily intended to represent the embodiments to scale. The drawing is, where useful for explanation, shown in schematized and/or slightly distorted form. With regard to additions to the teaching immediately recognizable from the drawing, reference is made to the relevant prior art. It should be kept in mind that numerous modifications and changes can be made to the form and detail of an embodiment without deviating from the scope of the invention as defined by the appended claims.

The following drawing shows in:
- Fig. 1: a preferred embodiment of a vehicle with a brake air through flow and brake dust collector system according to the concept of the invention schematically shown;
- Fig. 2A, Fig. 2B: a preferred embodiment of a vehicle brake system with a number of brake installations, each or a group of brake installations being assigned to a vehicle wheel at a vehicle axle, wherein the vehicle brake system further comprises brake air through flow and brake dust collector system according to the concept of the invention schematically shown as a system for separating and collecting brake dust particles;
- Fig. 3A. Fig. 3B: a brake air through flow device of a preferred embodiment as a dust separating and collecting device with a combination of a cyclone separator element, a collecting element and a filter element for said embodiment of a brake air system, in a side view and an explode view;
- Fig. 4: the brake air through flow device of the preferred embodiment in a cross sectional view;
- Fig. 5A: the brake air through flow device of the preferred embodiment in a cross sectional view with schematically shown brake air flow in side thereof
- Fig. 5B: a flow simulation for said preferred embodiment in a cross sectional view, proving the concept if the invention, wherein particles in the collector correspond to dust particles and these are obviously separated and collected in the brake air through flow de vice;
- Fig. 6: a flow chart for illustrating a preferred embodiment of a method for purifying brake air from a vehicle brake system with a number of brake installations, each brake installation being assigned to a vehicle wheel at a vehicle axle, the method operating the brake air through flow and brake dust collector system of the preferred embodiment.

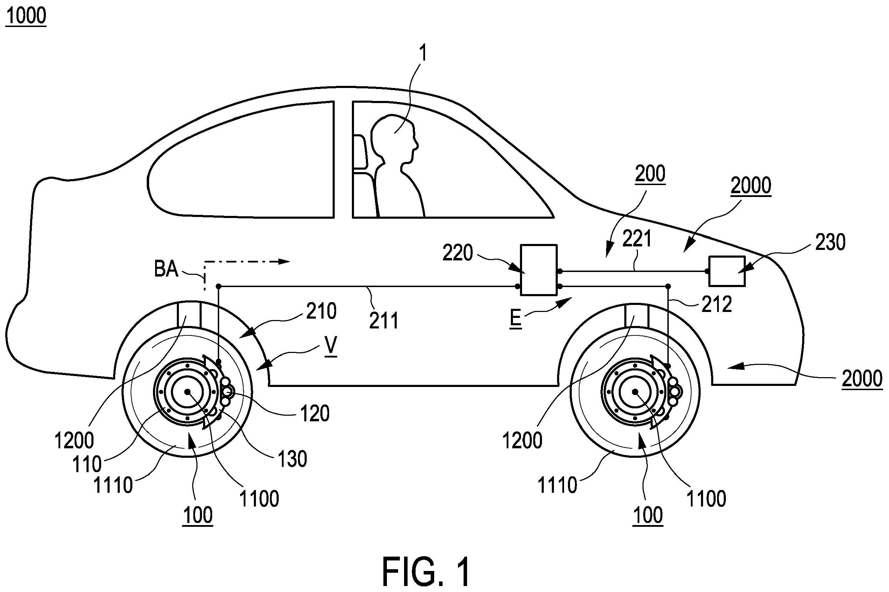

Fig. 1 shows a preferred embodiment of a vehicle 1000 as generally known in the art, wherein the vehicle 1000 has a number of axles 1100 with each axle 1100 having a vehicle wheel 1110 rotatable installed thereon for moving the vehicle, whilst each of the wheels 1110 is damped by means of an air cushion 1200 and pneumatically connected to a pressurized air regulatory system, which is not shown in detail. De-acceleration of the vehicle 1000 is possible by a brake installation of a vehicle brake system, which is not shown in detail.

A brake installation 100 which can be actuated by the vehicle brake system is controllable connected to the vehicle brake system, herewith is shown at each of the wheels 1110. Therein the brake installation 100 is shown having a disc or rotor 110, a saddle 120 and a pad 130 at the inside of the saddle 120 in the nearest neighborhood of the disc or rotor 110 and which can be brought into braking contact with the disc or rotor 110 under control of the vehicle brake system. Said braking contact is accompanied with friction between the disc or rotor 110 and the pad 130 and produces pad and rotor or disc dust particles in the surrounding air; i.e. brake air BA. Surrounding pollution is known to be due to brake pad and rotor or disc dust particles. Dust from the brake pad 130 and rotor or disc 110 is not healthy for a human and in general for environment. It is important to eliminate or restrict emissions of brake pad and rotor or disc dust to environment.

Air flow hereinafter is referred to as brake air BA, which is generally laden with impurities, namely thus produced by said pad 130 of the brake installation 100 when being actuated against the brake disc or rotor 110 by the brake saddle 130.

A brake air through flow and brake dust collector system 200 --herein after referred to as a brake air system 200-- and described to handle the object of purifying said brake air BA in a vehicle brake system 2000 of the vehicle 1000. The vehicle brake system 2000 comprises the number of brake installations 100, each brake installation 100 being assigned to a vehicle wheel 1100 at a vehicle axle, the vehicle brake system 2000 further comprising the brake air system 200.

Such brake air system 200 helps to protect a driver or the like human 1 to inhale said brake air BA which can cause unhealthy intake of debris dust or the like impurities laden in the air flow of brake air BA from a brake pad 110, a brake disc or rotor 130 the like parts of the brake installation 100.

As is shown in Fig. 1 in general, said brake air system 200 provides for an air duct assembly with a brake air receiving element 210 fluidly connectable to the brake installation 100 for receiving the brake air BA in the vicinity V of the brake installation 100. The air duct assembly with a brake air receiving element 210 is adapted for flow transport of the brake air BA to a distal environment E of the vehicle 1000. At the distal environment E, the brake air through flow system 200 provides for a brake air through flow device 220 and according to the concept of the invention also at the distal environment a suction element 230 is provided as will be described in detail herein after.

It should be noticed that in Fig. 1 the brake air through flow system 200 provides for the brake air receiving element and air duct assembly 210 in the vicinity V of the brake installation 100 at each of the brake installations 100.

Still, at the distal environment E in this embodiment of Fig. 1 a common brake air through flow device 220 and suction element 230 is provided for all of the number of brake air receiving elements 210, wherein each brake installation vicinity V has a brake air receiving element 210. Thus, the common brake air through flow device 220 is connected fluidly to said brake air receiving elements 210 by way of air ducts 211 respectively via said brake air through flow device 220. In turn, the brake air through flow device 220 is fluidly connected by air duct 221 to said suction element 230.

This brake air system 200 provides a solution according to the concept of the invention overcoming disadvantages of state of art.

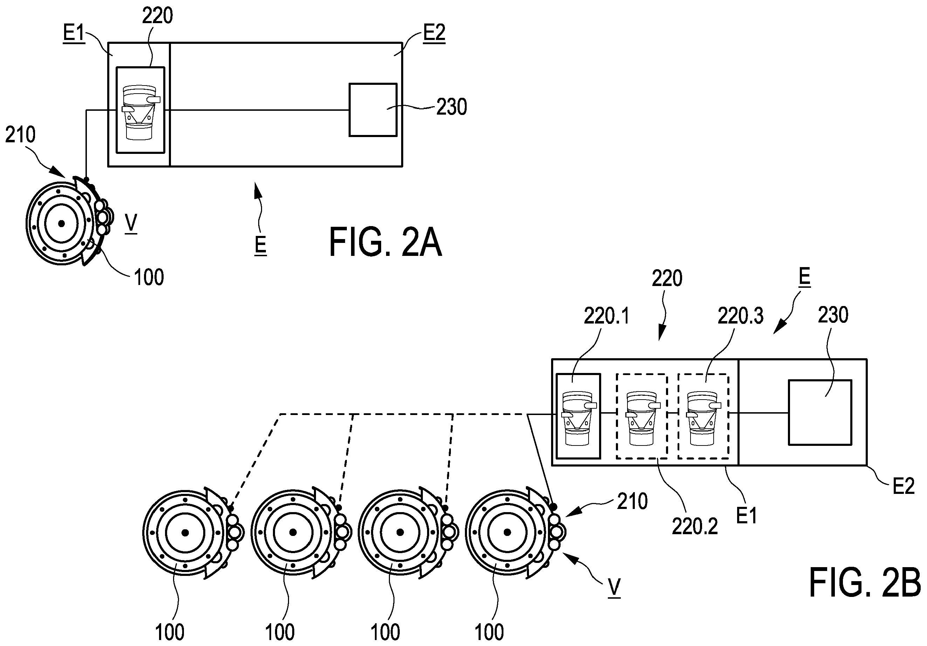

It should be understood --as shown by the variations depicted in Fig. 2A and Fig. 2B in more detail-- a single brake installation 100 at a wheel may receive a brake air receiving element 210 as mentioned before, wherein each brake air receiving element 210 is assigned to brake air through flow device 220 at a distal environment E -possibly at a first distal environment E1-- and a single suction element 230 at distal environment E -possibly at a second distal environment E2--. It should be noticed that the distal environment E does not necessarily need to be the same for the brake air through flow device 220 and the suction element 230. It is to be understood that indeed the brake air through flow device 220 can be located in the vehicle 1000 at a different distal environment E1 as compared to the distinct distal environment E2 of the suction element 230.

This preferred embodiment of a --so to speak-- 1:1 assignment of brake air through flow device 220 and suction element 230 in distal environment E to said single brake air receiving element 210 in the vicinity V of the brake installation 100 is depicted in the embodiment of Fig. 2A.

Also --as is seen in embodiment of Fig. 2B-- the examplary situation of the embodiment in Fig. 1 can be found -indicated with a full line connectionwherein one or more of the brake installations 100 of a vehicle 1000 are fluidly connected with a brake air receiving element 210 while each of the brake air receiving elements 210 in the vicinity V of a brake installation 100 together are commonly connected to a single brake air through flow device 220 and suction element 230 both at a distal environment E.

Further, it should be noticed that at the distal environment E a brake air through flow device 220 may comprise a single unit thereof. Still also, various units 220.1, 220.2, 220.3, 220.n thereof are possible, which is indicated by 220.1, 220.2, 220.3 as an example in Fig. 2B. Also, another number of brake air through flow device units 220.n can be provided depending on the needs and number of brake installations 100 at the vehicle 1000.

It should also be understood that --whilst Fig. 1 shows an embodiment of a passenger car, still nevertheless-- the instant invention is applicable also to use vehicles like, for instance a construction machine, a transport truck and a trailer. Also people movers like a bus, a small transporter and the like make use of a brake air through flow and brake dust collector system 200 for a brake installation 100 as explained. Also the instant concept of the invention is not restricted to street vehicles, but also to off-road vehicles and trail vehicles.

Each of the brake air through flow devices 220 shown in Fig. 2A, Fig. 2B provides for a combination of a cyclone separator element with other elements as will be apparent from the below description of the brake air through flow device 220. Said brake air through flow and brake dust collector system 200 herein after is referred to as brake air system 200 with a brake air throw flow device 500 as shown and described in more detail.

The brake air system 200 by way of the brake air through flow device 220 is adapted for separating and collecting brake dust particles. As mentioned, the brake air system 200 comprises said ducts 211 directing the brake air BA from brake installation 100 to said brake air through flow device 220 which acts as a separating and collecting device for separating and collecting particles from the brake air BA under a suction pressure to the brake air BA, which is referred to also hereinafter as a negative pressure generated from a suction element for generating a suction pressure, i.e. a kind of generator.

Said suction element 230, i.e. said kind of generator, is adapted for generating a suction pressure to the brake air BA receivable from the brake air through flow device 220 to generate a propulsive brake air flow through the brake air through flow device 220 and further adapted to extend the suction pressure to the brake air receiving element 210 in the vicinity of the brake installation. The suction pressure can be considered as a negative pressure from said generator of suction element 230 can be realized by pneumatic connection (not shown) of the suction element 230 to intake manifold, connection to a compressor intake, an exhaust, a fan or by placing an outlet of dust separating and collecting device in area with different pressure and temperature (thus different air density) which will create chimney effect. Said so called symbolic negative pressure should be understood broadly as any kind of difference between outlet pressure and inlet pressure. I.e. pressure at outlet (distal environment E) should be lower than pressure at inlet (vicinity V)).

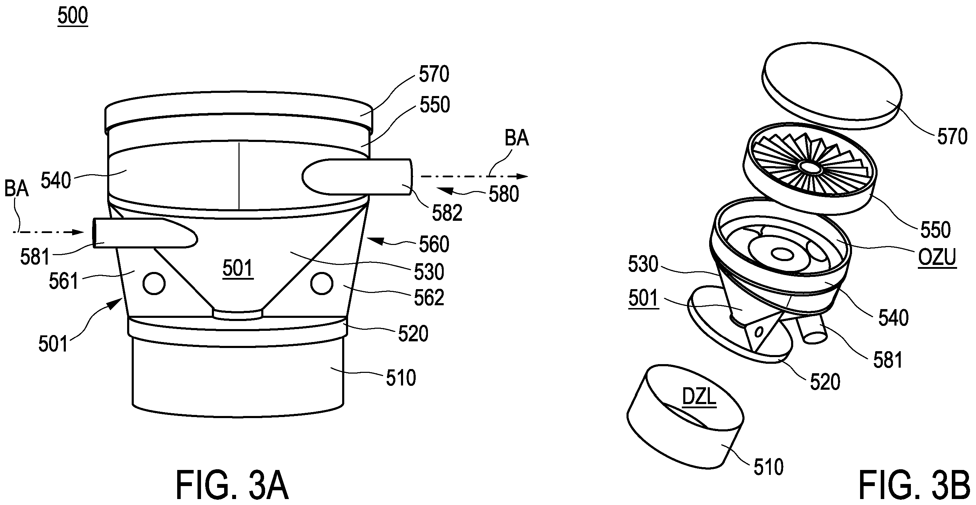

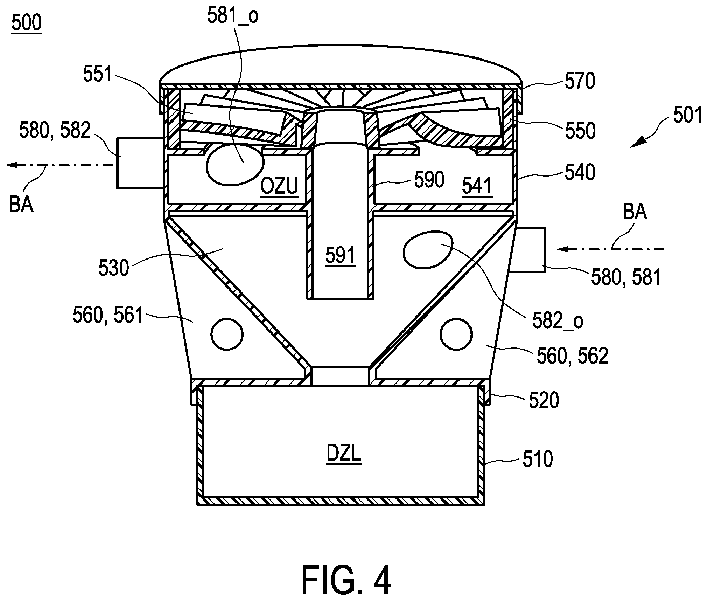

This being said, Fig. 3A shows an embodiment of a brake air through flow device 500 of the aforementioned kind. Said brake air through flow device in the instant embodiment is formed in a sequential arrangement from bottom to top by a collecting element 510, a cyclone separator element 530 and a filter element 550 and a lid 570 as is best shown in side plan view of Fig. 3A and a perspective explosion view of Fig. 3B; hereinafter also the sectional view thereof in Fig. 4, the brake air through flow device 500 is referenced with the same reference marks.

The brake air through flow device 220 in this embodiment is adapted as a separating and collecting device comprising the collecting element 510 as a detachable collector with a collector chamber, which in Fig. 3B and Fig. 4 is indicated as a lower drop zone DZL. The collecting element 510 is placed below the cyclone separator element 530. Also, in a kind of staple arrangement, the location of the collecting element 510 is lowermost, namely also below the filter element 550 and thus below an inlet interface 581 and below an outlet interface 582. As a consequence service of the brake air through flow device 500 adapted as a separating and collecting device for particles P and impurities contained in dust or the like in the brake air BA can be done without disconnection of the inlet interface 581 and/or disconnection of the outlet interface 582. So to say the lowermost collecting element 510 can be separated individually from the bottom of the brake air through flow device 500 without affecting the other elements and sections 530, 540, 550, 570 thereof - the lowermost collecting element 510 thus can be easily emptied from particles P collected therein.

On top of the collecting element 510 the brake air through flow device 520 is built with said cyclone separator element 530, wherein the housing thereof has an inlet interface 581 to a cone separation chamber as clearly seen from Fig. 3A and Fig. 4 for initial air cleaning of the brake air. Further, on top thereof the brake air through flow device 520 is built with said filter element 550 with a filtration chamber and therein a filtering means is seen from Fig. 3B and Fig. 4 for final air cleaning. Exchange of filtering means is easy affordable due to fact that the outlet interface 582 is placed below the filtering means seat. The collecting element 510 can be connected with the housing of the cyclone separator element 530 by thread or latch connection or such form connection which enables easy disassembly and emptying the collecting element 510 .

Further, an outlet interface 582 is provided from an intermediate volume of an intermediate volume section 540. The filtration chamber is enclosed by the lid 570 on top of the filter element 550.

Further the device housing 501 at the cyclone separator element 530 of the brake air through flow device 220 comprises an interface or the like mounting assembly 560 for assembly on the vehicle. The whole brake air through flow device 220 can be assembled to a chassis or a suspension in the vicinity of brake installation still remote therefrom in said distal environment E.

As can be seen at best from the explosion view of Fig. 3B, an intermediate volume section 540 is formed in between said cyclone separator element 530 and the filter element 550, whereas the intermediate volume section 540 is a part of the cyclone separator element 530, thus, the intermediate volume section 540 is formed as an integral part of the cyclone separator element 530 in this embodiment.

As can be seen from Fig. 3A and even better from Fig. 3B, said intermediate volume section 540 can be recognized as a cylindrical section on top of a frustoconical section of the cyclone comprising cyclone separator element 530.

Further, the cyclone separator element 530 provides for a coverage 520 to cover the collecting element 510, when the cyclone separator element 530 is placed on top of the collecting element 510.

Thus, the device housing 501 of the brake air through flow device 500 indeed basically is formed from four detachable parts; namely as mentioned with collecting element 510, cyclone separator element 530, filter element 550 and the lid 570. Still, however, said coverage 520 and intermediate volume section 540 is adapted to fittingly receive said collecting element 510 on the one hand and filter element 550 on the other hand to tightly hold the elements 510, 530, 550 of the housing 501 together.

Further, it should be mentioned that the cyclone separator element 530 provides for fluid connecting inlet interface 581 and outlet interface 582 and also mounting assembly 560. Said mounting assembly in turn is adapted for attachment of the housing 501 to a vehicle, whereas the lid 570 and the collector 510 are detachable from the housing 501 for reassembly. The lid 570 is connected with the housing 501 by a thread or latch connection and a another but similar connection enables easy disassembly and exchange of the filtering means.

Further, in this embodiment, the above mentioned mounting assembly 560 as mentioned has two sides 561, 562, wherein the mounting assembly 560 is arranged in a conical section of the device housing 501, namely in the conical section of the cyclone separator element 530. Additionally or alternatively, the outlet interface from the filter element is arranged in a cylindrical section of the device housing 501 assigned to an intermediate volume between cyclone separator element 530 and filter element 550.

It should be mentioned that the inlet interface 581 and outlet interface 582 are adapted to receive and eject brake air flow BA as is indicated with dash-dotted lines in Fig. 3A.

The whole device housing 501 and the inner structure thereof --as is best seen from Fig. 3B-- can be manufactured from a 3D printing process. In particular the housing 501, the collecting element 510 and lid 570 is preferably made from plastic. The housing 501 is preferably 3D-printed or joint from separate part to simplify manufacturing process.

In the embodiment of Fig. 4, the inner structure of in particular the cyclone separator element 530 and intermediate volume section 540 and filter element 550 is visible.

As mentioned above and shown in detail hereinafter the filter element 550 is adapted to receive an exchangeable filter 551, which can be readily placed as a ring shaped folded form with axial through hole to be placed around an inner through pipe between cyclone separator element 530 and filter element 550.

The through pipe 590 herewith is shown as crossing the intermediate volume element 540. Thus, the intermediate volume 541 between cyclone separator element 530 and filter element 550 forms an upper open zone OZU below the filter element 550 and the collecting element 510 forms a lower drop zone DZL below the cyclone separator element 530. Further, a channel of the intermediate volume 541 section 540 and an upflow volume 591 in the through pipe 590 are pneumatically separated and are arranged in a cross flow configuration. Brake air BA in the intermediate volume 541, i.e. in the upper open zone OZU, already passed through the filter element 550, where all residual dust finally should have been stopped after particles P already have dropped out of the flow in the cyclone separator element 530.

Also, the embodiment of Fig. 4 reveals the inner structure of orifice 582_o of intlet to the conical section of cyclone separator element 530 and orifice 581_o of outlet from a cylindrical section of intermediate volume section 540, respectively.

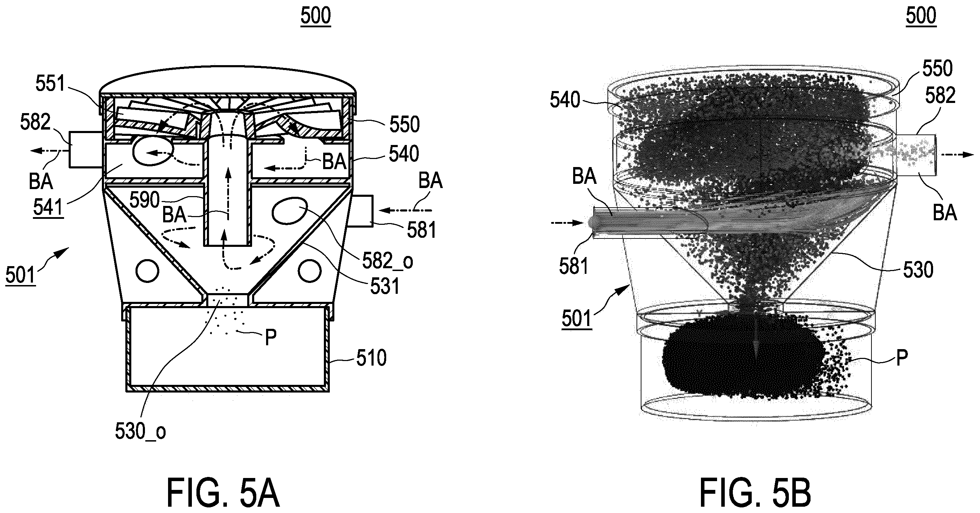

The path of the brake air flow BA is shown in more detail in Fig. 5A and a simulation model result is shown in Fig .5B, respectively. Thereby an evaluation of the efficient purifying of laden flow of brake air BA from impurities like brake particles and the like has been given. This being said, Fig. 5A shows with the reference signs of Fig. 4 the brake air through flow device 500 with device housing 501 in operation and with a stable brake air flow BA from inlet interface 581 to outlet interface 582.

Air with dust enters the cyclone separator element 530 by inlet interface 581 and thus the brake air BA enters the conical cyclone separator element 530 in a peripheral region, i.e. the inner volume of the conical section thereof, through orifice 582_o. Thereby a rotational momentum is forces the brake air flow BA into a circumferential movement around the upgoing through pipe 590. The shape on the basically conical separation chamber of the cyclone separator element 530 forces the air to move down with spiral trajectory as shown in Fig. 5A. Circumferential and centrifugal forces throw the dust particles against separation chamber walls; i.e. the conical section wall part 531 of the cyclone separator element 530. Thereby, the impurities and dust particles and the like are slammed due to the rotational centrifugal forces against the conical section wall part 531 of the cyclone separator element 530, whereas the brake air BA flows through the upgoing through pipe 590 to the filter element 550. This causes the particles P to loose velocity and the heavier particles drop to the collector chamber which has been referred to as the lower drop zone DZL in the collecting element 510.

In this situation during the initial air cleaning as mentioned before in the cyclone element 530, the brake air BA is at first purified from said particles already, wherein said particles and the like impurities P drop down through a collecting orifice 530_o to the inner part of the collecting element 510.

Brake air BA with some very fine dust particles enters a central duct of the upgoing through pipe 590 and travels to filtration chamber with the filter element 550. Thus, the brake air BA in this situation flowing up through the upgoing through pipe 590 already is free of said particles P and so to speak purified therefrom laden impurities. Next the brake air BA passes through filter element 550 which catches remaining dust particles. Purified air pBA leaves the device by outlet interface 582.

Thus, in a further final air cleaning the brake air BA is urged by flow through the filter 551 in the filter element 550. Thereby fines and small particulate laden and the like dust and impurities is removed from the brake air BA and the finally purified brake air BA is free of fines and passes to the intermediate volume 541 of the intermediate volume section 540 to orifice 581_o.

Thus, the --twice purified-- brake air BA leaves the intermediate volume 541 of the intermediate volume section 540 through the orifice 581_o to outlet 582 and purified brake air BA is outputted to the environment E thereby.

As shown in Fig. 5B such solution enables to catch in the collecting element 510 most of the particles P and e.g. water, preventing the filter element 550 from clogging and extending service period.

In the model simulation shown with picture of Fig. 5B, said particles P (in dotted dark color below) are shown in the collecting element 510, which have dropped from the laden brake air BA in the cyclone separator element 530 (in dotted dark color therein) after having passed the inlet interface 582 (stream in light color). The purifying brake air pBA (in dotted light color) at outlet 581 has passed the cyclone separator element 530 and the filter element 550 and the intermediate volume section 540 in this sequence.

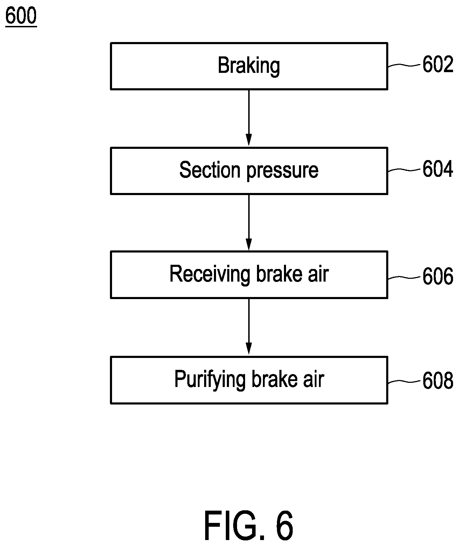

Fig. 6 shows in detail the concept of steps of a method for purifying brake airas has been explained before-- from a vehicle brake system with a number of brake installations 100. Each brake installation 100 is assigned to a vehicle wheel 1110 at a vehicle axle 1100. The method operates the brake air through flow and brake dust collector system 200 upon a braking step 602.

The method comprises:
- in a suction pressure generating step 604 generating a suction pressure to the brake air BA receivable from the brake air through flow device 500 by at least one suction element 230 to generate a propulsive brake air flow BA through the brake air through flow device 500 and further to extend the suction pressure to the brake air receiving element 210 in the vicinity V of the brake installation 100. The method comprises further:
- in a receiving brake air step 606 receiving brake air BA by a brake air receiving element 210 in the vicinity of the brake installation 100 and flow transport thereof to an environment E distal from the brake installation 100 by an air duct fluidly connectable to the brake installation 100,
- purifying the brake air in step 608 purifying the brake air BA in at least one brake air through flow device 220, 500 with a combination of a cyclone separator element 530, a collecting element 510 and a filter element 550, said elements being arranged along a through flow downward sequence of a device housing 501, wherein the brake air through flow device 500 separates and collects dust particles from the brake air flow and filters the brake air flow thereafter.

### REFERENCE LIST (PART OF THE DESCRIPTION)

- 1: human
- 100: brake installation
- 110: disc or rotor
- 120: saddle
- 130: pad at the saddle

- 200: brake air through flow and brake dust collector system, brake air system
- 210: brake air receiving element and air duct assembly
- 211, 212: air duct
- 220: brake air through flow device
- 220.1, 220.2, 220.3, 220.n: brake air through flow device units
- 221: air duct
- 230: suction element

- 500: brake air through flow device

- 501: device housing
- 520: coverage
- 510: collecting element
- 530: cyclone separator element
- 530_o: collecting orifice
- 531: conical section wall part
- 540: intermediate volume section
- 541: intermediate volume
- 550: filter element
- 551: exchangeable filter
- 560: mounting assembly
- 561, 562: side of attachment means
- 570: lid
- 580: fluid connection, inlet interface and outlet interface
- 581, 582: inlet interface, outlet interface
- 581_o, 582_ o: orifice
- 590: through pipe
- 591: upflow volume

- 602: braking
- 604: generating a suction pressure
- 606: receiving brake air
- 608: purifying the brake air

- 1000: vehicle
- 1100: axle
- 1110: wheel
- 1200: air cushion

- 2000: vehicle brake system

- BA: brake air, brake air flow

- DZL: lower drop zone
- OZU: upper open zone
- E, E1, E2: distal environment
- P: particles, impurities
- pBA: purified blade air
- V: vicinity

## Claims

1. A brake air through flow and brake dust collector system (200) for a brake installation (100), said brake air system comprising:
- an air duct (211) fluidly connectable to the brake installation with a brake air receiving element (210) for receiving brake air (BA) in the vicinity of the brake installation (100) and flow transport thereof to an environment (E) distal from the brake installation,
- at least one brake air through flow device (220, 500) with a combination of a cyclone separator element (530), a collecting element (510) and a filter element (550), said elements being arranged along a through flow downward sequence of a device housing (501), wherein the brake air through flow device is adapted for separating and collecting dust particles (P) from the brake air flow and filtering the brake air flow thereafter,
wherein
- at least one suction element (230) for generating a suction pressure to the brake air receivable from the brake air through flow device (220, 500) to generate a propulsive brake air flow through the brake air through flow device (220, 500) and further adapted to extend the suction pressure to the brake air receiving element (210) in the vicinity (V) of the brake installation (100), wherein
- the brake air through flow device (220, 500) and the suction element (230) are arranged at the distal environment (E, E1, E2) distal from the brake installation (100);
wherein the brake air through flow device (220, 500) has an intermediate volume (541), which is arranged between the cyclone separator element (530) and the filter element (550), wherein said intermediate volume (541) forms an open zone(OZU) below the filter element, and the collecting element (510) forms a drop zone (DZU) below the cyclone separator element (530); **characterised in that**
the intermediate volume (541) provides a channel for fluid connection to the suction element (230) such that the channel is arranged in a cross-flow configuration across a through pipe (590), wherein said through pipe (590) is arranged in fluid connection between the cyclone separator element (530) and the filter element (550), wherein the channel and the through pipe (590) are pneumatically separated.

2. Brake air system according to claim 1, **characterized in that** the suction element (230) partly or wholly is formed at the distal environment distal from the brake installation, the suction element comprising one or more of the suction means selected from the group consisting of:
- an air intake manifold of the vehicle,
- a compressor of the vehicle,
- a vehicle fan,
- a means of a pressure sink providing a lower pressure as compared to the pressure in the vicinity of the brake installation,
- a means for generating a venturi or chimney effect providing a lower pressure as compared to the pressure in the vicinity of the brake installation.

3. Brake air system according to claim 1 or 2, **characterized in that** the brake air through flow device (220, 500) has a single cyclone separator element (530) and/or a single cyclone separator element (530) assigned to the collecting element (510).

4. Brake air system according to anyone of the preceding claims, **characterized in that** the device housing (501), in a sequential arrangement from bottom to top is formed by the collecting element (510), the cyclone separator element (530), the filter element (550) and a lid (570).

5. Brake air system according to anyone of the preceding claims, **characterized in that** the device housing (501) of the brake air through flow device (220, 500 further comprises:
- an inlet interface (581) in fluid connection to the cyclone separator element and/or an outlet interface (582) in fluid connection from the filter element,
- a mounting assembly (560) for attachment of the housing to a vehicle.

6. Brake air system according to claim 5, **characterized in that**
- the mounting assembly (560) is arranged in a conical section of the device housing assigned to the cyclone separator element, and/or
- the inlet interface (581) is arranged in a conical section of the device housing assigned to the cyclone separator element and/or
- the outlet interface (582) is arranged in a cylindrical section of the device housing assigned to an intermediate volume between cyclone separator element and filter element.

7. Brake air system according to anyone of the preceding claims, **characterized in that** the brake air through flow device (220, 500) is manufactured from a 3D-printing process.

8. A vehicle brake system (2000) with a number of brake installations (100), each brake installation being assigned to a vehicle wheel at a vehicle axle, the vehicle brake system further comprising the brake air system (200) according to anyone of the preceding claims.

9. Vehicle brake system according to claim 8, **characterized in that** r a single vehicle brake air system, is assigned to each of the brake installations separately.

10. Vehicle brake system according to claim 8 or 9, **characterized in that** a common assembly of a single or a number of brake air through flow devices is assigned to a partial number of or all of the brake installations of the vehicle, each brake installation being assigned to a vehicle wheel at a vehicle axle.

11. Vehicle with a vehicle brake system according to anyone of the claims 8 to 10, **characterized in that** the device housing (501) of the brake air through flow device (220, 500) is attached to a chassis of the vehicle at the distal environment (E) distal from the brake installation (100).

12. Method (600) for purifying brake air from a vehicle brake system with a number of brake installations including each a brake air system according to one of the preceding claims 1 to 7, each brake installation being assigned to a vehicle wheel at a vehicle axle, the method operating the brake air through flow and brake dust collector system (200) and comprising the steps of:
- generating a suction pressure to the brake air receivable from the brake air through flow device by at least one suction element (230) to generate a propulsive brake air flow through the brake air through flow device and further to extend the suction pressure to the brake air receiving element in the vicinity of the brake installation,
- receiving the brake air by a brake air receiving element (210) in the vicinity of the brake installation and flow transport thereof to an environment distal from the brake installation by an air duct fluidly connectable to the brake installation,
- purifying the brake air in at least one brake air through flow device (220, 500) with a combination of a cyclone separator element, a collecting element, and a filter element, said elements being arranged along a through flow downward sequence in a device housing, wherein the brake air through flow device separates and collects dust particles from the brake air flow and filters the brake air flow thereafter.

13. Brake air system according to anyone of the preceding claims 1 to 7, **characterized in**
**that** the device housing (501) in a sequential arrangement from bottom to top is formed by
the collecting element (510), the cyclone separator element (530), the filter element (550) and a lid (570), wherein the lid and the collecting element are detachably from the housing in that the lid and the collecting element are adapted for reassembly.

14. Brake air system according to anyone of the preceding claims 1 to 7, **characterized in**
**that** the device housing (501) of the brake air through flow device (220, 500 further comprises:
- an inlet interface (581) in fluid connection to the cyclone separator element and/or an outlet interface (582) in fluid connection from the filter element wherein the intermediate volume (541) is in fluid connection to the outlet interface (582),
- a mounting assembly (560) for attachment of the housing to a vehicle.

## Patentansprüche

1. Bremsluftdurchfluss- und Bremsstaubsammelsystem (200) für eine Bremsanlage (100), wobei das Bremsluftsystem umfasst:
- einen mit der Bremsanlage fluidisch verbindbaren Luftkanal (211) mit einem Bremsluftaufnahmeelement (210) zur Aufnahme von Bremsluft (BA) in der Nähe der Bremsanlage (100) und deren Flusstransport in eine von der Bremsanlage entfernte Umgebung (E),
- mindestens eine Bremsluftdurchflussvorrichtung (220, 500) mit einer Kombination aus einem Zyklonabscheiderelement (530), einem Sammelelement (510) und einem Filterelement (550), wobei die Elemente entlang einer Durchfluss-Abwärtssequenz eines Vorrichtungsgehäuses (501) angeordnet sind, wobei die Bremsluftdurchflussvorrichtung zum Abscheiden und Sammeln von Staubpartikeln (P) aus dem Bremsluftstrom und zum anschließenden Filtern der Bremsluftstroms angepasst ist, wobei
- mindestens ein Saugelement (230) zum Erzeugen eines Saugdrucks für die von der Bremsluftdurchflussvorrichtung (220, 500) aufnehmbare Bremsluft, um einen vortreibenden Bremsluftstrom durch die Bremsluftdurchflussvorrichtung (220, 500) zu erzeugen, und das ferner geeignet ist, den Saugdruck auf das Bremsluftaufnahmeelement (210) in der Nähe (V) der Bremsanlage (100) auszudehnen, wobei
- die Bremsluftdurchflussvorrichtung (220, 500) und das Saugelement (230) an der distalen Umgebung (E, E1, E2) distal der Bremsanlage (100) angeordnet sind;
wobei die Bremsluftdurchflussvorrichtung (220, 500) ein Zwischenvolumen (541) aufweist, das zwischen dem Zyklonabscheiderelement (530) und dem Filterelement (550) angeordnet ist, wobei das Zwischenvolumen (541) unterhalb des Filterelements eine offene Zone (OZU) bildet und das Sammelelement (510) unterhalb des Zyklonabscheiderelements (530) eine Tropfzone (DZU) bildet; **dadurch gekennzeichnet, dass**
das Zwischenvolumen (541) einen Kanal zur Fluidverbindung mit dem Saugelement (230) bereitstellt, so dass der Kanal in einer Kreuzstromkonfiguration über ein Durchgangsrohr (590) angeordnet ist, wobei das Durchgangsrohr (590) in Fluidverbindung zwischen dem Zyklonabscheiderelement (530) und dem Filterelement (550) angeordnet ist, wobei der Kanal und das Durchgangsrohr (590) pneumatisch getrennt sind.

2. Bremsluftsystem nach Anspruch 1, **dadurch gekennzeichnet, dass** das Saugelement (230) teilweise oder vollständig an der distalen Umgebung distal von der Bremsanlage ausgebildet ist, wobei das Saugelement ein oder mehrere der Saugmittel umfasst, die aus der Gruppe ausgewählt sind, bestehend aus:
- einem Luftansaugkrümmer des Fahrzeugs,
- einem Kompressor des Fahrzeugs,
- einem Fahrzeugventilator,
- einem Mittel einer Drucksenke, die einen niedrigeren Druck im Vergleich zu dem Druck in der Nähe der Bremsanlage bereitstellt,
- ein Mittel zum Erzeugen eines Venturi- oder Kamineffekts, der einen niedrigeren Druck im Vergleich zu dem Druck in der Nähe der Bremsanlage bereitstellt.

3. Bremsluftsystem nach Anspruch 1 oder 2,
**dadurch gekennzeichnet, dass** die Bremsluftdurchflussvorrichtung (220, 500) ein einzelnes Zyklonabscheiderelement (530) und/oder ein einzelnes dem Sammelelement (510) zugeordnetes Zyklonabscheiderelement (530) aufweist.

4. Bremsluftsystem nach einem der vorstehenden Ansprüche,
**dadurch gekennzeichnet, dass** das Vorrichtungsgehäuse (501) in einer Sequenzanordnung von unten nach oben durch das Sammelelement (510), das Zyklonabscheiderelement (530), das Filterelement (550) und einen Deckel (570) gebildet wird.

5. Bremsluftsystem nach einem der vorstehenden Ansprüche,
**dadurch gekennzeichnet, dass** das Vorrichtungsgehäuse (501) der Bremsluftdurchflussvorrichtung (220, 500) ferner umfasst:
- eine Einlassschnittstelle (581) in Fluidverbindung mit dem Zyklonabscheiderelement und/oder eine Auslassschnittstelle (582) in Fluidverbindung vom Filterelement,
- eine Montageanordnung (560) zur Befestigung des Gehäuses an einem Fahrzeug.

6. Bremsluftsystem nach Anspruch 5, **dadurch gekennzeichnet, dass**
- die Montageanordnung (560) in einem dem Zyklonabscheiderelement zugeordneten konischen Abschnitt des Vorrichtungsgehäuses angeordnet ist, und/oder
- die Einlassschnittstelle (581) in einem dem Zyklonabscheiderelement zugeordneten konischen Abschnitt des Vorrichtungsgehäuses angeordnet ist und/oder
- die Auslassschnittstelle (582) in einem zylindrischen Abschnitt des Vorrichtungsgehäuses angeordnet ist, der einem Zwischenvolumen zwischen Zyklonabscheiderelement und Filterelement zugeordnet ist.

7. Bremsluftsystem nach einem der vorstehenden Ansprüche,
**dadurch gekennzeichnet, dass** die Bremsluftdurchflussvorrichtung (220, 500) im 3D-Druckverfahren hergestellt ist.

8. Fahrzeugbremssystem (2000) mit einer Anzahl von Bremsanlagen (100), wobei jede Bremsanlage einem Fahrzeugrad an einer Fahrzeugachse zugeordnet ist, wobei das Fahrzeugbremssystem ferner das Bremsluftsystem (200) nach einem der vorstehenden Ansprüche umfasst.

9. Fahrzeugbremssystem nach Anspruch 8,
**dadurch gekennzeichnet, dass** r, ein Einzelfahrzeugbremsluftsystem, jeder der Bremsanlagen separat zugeordnet ist.

10. Fahrzeugbremssystem nach Anspruch 8 oder 9,
**dadurch gekennzeichnet, dass** einer Teilanzahl oder allen Bremsanlagen des Fahrzeugs eine gemeinsame Anordnung einer oder mehrerer Bremsluftdurchflussvorrichtungen zugeordnet ist, wobei jede Bremsanlage einem Fahrzeugrad an einer Fahrzeugachse zugeordnet ist.

11. Fahrzeug mit einem Fahrzeugbremssystem nach einem der Ansprüche 8 bis 10, **dadurch gekennzeichnet, dass** das Vorrichtungsgehäuse (501) der Bremsluftdurchflussvorrichtung (220, 500) an einem Fahrgestell des Fahrzeugs an der von der Bremsanlage (100) distalen Umgebung (E) befestigt ist.

12. Verfahren (600) zum Reinigen von Bremsluft aus einem Fahrzeugbremssystem mit einer Anzahl von Bremsanlagen, die jeweils ein Bremsluftsystem nach einem der vorstehenden Ansprüche 1 bis 7 einschließen, wobei jede Bremsanlage einem Fahrzeugrad an einer Fahrzeugachse zugeordnet ist, wobei das Verfahren das Bremsluftdurchfluss- und Bremsstaubsammelsystem (200) betreibt und die folgenden Schritte umfasst:
- Erzeugen eines Saugdrucks auf die von der Bremsluftdurchflussvorrichtung aufnehmbare Bremsluft durch mindestens ein Saugelement (230), um einen treibenden Bremsluftstrom durch die Bremsluftdurchflussvorrichtung zu erzeugen und den Saugdruck ferner auf das Bremsluftaufnahmeelement in der Nähe der Bremsanlage auszudehnen,
- Aufnehmen der Bremsluft durch ein Bremsluftaufnahmeelement (210) in der Nähe der Bremsanlage und Flusstransport derselben in eine von der Bremsanlage distalen Umgebung durch einen mit der Bremsanlage fluidisch verbindbaren Luftkanal,
- Reinigen der Bremsluft in mindestens einer Bremsluftdurchflussvorrichtung (220, 500) mit einer Kombination aus einem Zyklonabscheiderelement, einem Sammelelement und einem Filterelement, wobei die Elemente entlang einer Durchfluss-Abwärtssequenz in einem Vorrichtungsgehäuse angeordnet sind, wobei die Bremsluftdurchflussvorrichtung Staubpartikel aus dem Bremsluftstrom trennt und sammelt und den Bremsluftstrom anschließend filtert.

13. Bremsluftsystem nach einem der vorstehenden Ansprüche 1 bis 7, **dadurch gekennzeichnet, dass** das Vorrichtungsgehäuse (501) in einer Sequenzanordnung von unten nach oben durch das Sammelelement (510), das Zyklonabscheiderelement (530), das Filterelement (550) und einen Deckel (570) gebildet wird, wobei der Deckel und das Sammelelement vom Gehäuse abnehmbar sind, indem der Deckel und das Sammelelement für eine erneute Montage geeignet sind.

14. Bremsluftsystem nach einem der vorstehenden Ansprüche 1 bis 7, **dadurch gekennzeichnet, dass** das Vorrichtungsgehäuse (501) der Bremsluftdurchflussvorrichtung (220, 500) ferner umfasst:
- eine Einlassschnittstelle (581) in Fluidverbindung mit dem Zyklonabscheiderelement und/oder eine Auslassschnittstelle (582) in Fluidverbindung vom Filterelement, wobei das Zwischenvolumen (541) in Fluidverbindung mit der Auslassschnittstelle (582) steht,
- eine Montageanordnung (560) zur Befestigung des Gehäuses an einem Fahrzeug.

## Revendications

1. Système collecteur de poussière de freinage et de flux d'air de freinage (200) pour une installation de freinage (100), ledit système d'air de freinage comprenant :
- un conduit d'air (211) relié de manière fluidique à l'installation de freinage avec un élément récepteur d'air de freinage (210) pour recevoir l'air de freinage (BA) à proximité de l'installation de freinage (100) et l'acheminer vers un environnement (E) éloigné de l'installation de freinage,
- au moins un dispositif de flux d'air de freinage (220, 500) avec une combinaison d'un élément séparateur à cyclone (530), d'un élément collecteur (510) et d'un élément filtrant (550), lesdits éléments étant disposés le long d'une séquence d'écoulement vers le bas d'un boîtier de dispositif (501), dans lequel le dispositif de flux d'air de freinage est adapté pour séparer et collecter des particules de poussière (P) du flux d'air de freinage et filtrer ensuite le flux d'air de freinage, dans lequel
- au moins un élément d'aspiration (230) pour générer une pression d'aspiration sur l'air de freinage reçu du dispositif de flux d'air de freinage (220, 500) pour générer un flux d'air de freinage propulsif à travers le dispositif de flux d'air de freinage (220, 500) et adapté en outre pour étendre la pression d'aspiration à l'élément récepteur d'air de freinage (210) à proximité (V) de l'installation de freinage (100), dans lequel
- le dispositif de flux d'air de freinage (220, 500) et l'élément d'aspiration (230) sont disposés dans l'environnement distal (E, E1, E2) éloigné de l'installation de freinage (100) ;
dans lequel le dispositif de flux d'air de freinage (220, 500) présente un volume intermédiaire (541), qui est disposé entre l'élément séparateur à cyclone (530) et l'élément filtrant (550), dans lequel ledit volume intermédiaire (541) forme une zone ouverte (OZU) en dessous de l'élément filtrant, et l'élément collecteur (510) forme une zone de chute (DZU) en dessous de l'élément séparateur à cyclone (530) ; **caractérisé en ce que**
le volume intermédiaire (541) fournit un canal pour la liaison fluidique à l'élément d'aspiration (230) de telle sorte que le canal est disposé dans une configuration d'écoulement transversal à travers une conduite de passage (590), dans lequel ladite conduite de passage (590) est disposée en liaison fluidique entre l'élément séparateur à cyclone (530) et l'élément filtrant (550), dans lequel le canal et la conduite de passage (590) sont pneumatiquement séparés.

2. Système d'air de freinage selon la revendication 1, **caractérisé en ce que** l'élément d'aspiration (230) est partiellement ou entièrement formé au niveau de l'environnement distal éloigné de l'installation de freinage, l'élément d'aspiration comprenant un ou plusieurs moyens d'aspiration choisis dans le groupe constitué par :
- un collecteur d'admission d'air du véhicule,
- un compresseur du véhicule,
- un ventilateur de véhicule,
- un moyen de chute de pression fournissant une pression inférieure à la pression à proximité de l'installation de freinage,
- un moyen de génération d'un effet de venturi ou de cheminée fournissant une pression inférieure à la pression à proximité de l'installation de freinage.

3. Système d'air de freinage selon la revendication 1 ou 2,
**caractérisé en ce que** le dispositif de flux d'air de freinage (220, 500) présente un seul élément séparateur à cyclone (530) et/ou un seul élément séparateur à cyclone (530) affecté à l'élément collecteur (510).

4. Système d'air de freinage selon l'une quelconque des revendications précédentes, **caractérisé en ce que** le boîtier de dispositif (501), dans un arrangement séquentiel de bas en haut, est formé par l'élément collecteur (510), l'élément séparateur à cyclone (530), l'élément filtrant (550) et un couvercle (570).

5. Système d'air de freinage selon l'une quelconque des revendications précédentes, **caractérisé en ce que** le boîtier de dispositif (501) du dispositif de flux d'air de freinage (220, 500) comprend en outre :
- une interface d'entrée (581) en liaison fluidique avec l'élément séparateur à cyclone et/ou une interface de sortie (582) en liaison fluidique avec l'élément filtrant,
- un ensemble de montage (560) pour attacher le boîtier à un véhicule.

6. Système d'air de freinage selon la revendication 5, **caractérisé en ce que**
- l'ensemble de montage (560) est disposé dans une section conique du boîtier de dispositif affecté à l'élément séparateur à cyclone, et/ou
- l'interface d'entrée (581) est disposée dans une section conique du boîtier de dispositif affectée à l'élément séparateur à cyclone et/ou
- l'interface de sortie (582) est disposée dans une section cylindrique du boîtier de dispositif affectée à un volume intermédiaire entre l'élément séparateur à cyclone et l'élément filtrant.

7. Système d'air de freinage selon l'une quelconque des revendications précédentes, **caractérisé en ce que** le dispositif de flux d'air de freinage (220, 500) est fabriqué à l'aide d'un procédé d'impression 3D.

8. Système de freinage de véhicule (2000) avec un certain nombre d'installations de freinage (100), chaque installation de freinage étant affectée à une roue de véhicule au niveau d'un essieu de véhicule, le système de freinage de véhicule comprenant en outre le système d'air de freinage (200) selon l'une quelconque des revendications précédentes.

9. Système de freinage de véhicule selon la revendication 8,
**caractérisé en ce qu'**un seul système d'air de freinage du véhicule est affecté à chacune des installations de freinage séparément.

10. Système de freinage de véhicule selon la revendication 8 ou 9, **caractérisé en ce qu'**un ensemble commun d'un seul ou d'un certain nombre de dispositifs de flux d'air de freinage est affecté à un nombre partiel ou à toutes les installations de freinage du véhicule, chaque installation de freinage étant affectée à une roue de véhicule au niveau d'un essieu de véhicule.

11. Véhicule équipé d'un système de freinage selon l'une quelconque des revendications 8 à 10, **caractérisé en ce que** le boîtier de dispositif (501) du dispositif de flux d'air de freinage (220, 500) est attaché au châssis du véhicule à l'environnement distal (E) éloigné de l'installation de freinage (100).

12. Procédé (600) de purification d'air de freinage d'un système de freinage de véhicule avec un certain nombre d'installations de freinage comportant chacune un système d'air de freinage selon l'une des revendications précédentes 1 à 7, chaque installation de freinage étant affectée à une roue de véhicule au niveau d'un essieu de véhicule, le procédé faisant fonctionner le système collecteur de poussière de freinage et de flux d'air de freinage (200) et comprenant les étapes suivantes :
- la génération d'une pression d'aspiration sur l'air de freinage reçu du dispositif de flux d'air de freinage par au moins un élément d'aspiration (230) pour générer un flux d'air de freinage propulsif à travers le dispositif de flux d'air de freinage et pour étendre en outre la pression d'aspiration à l'élément récepteur d'air de freinage à proximité de l'installation de freinage,
- la réception de l'air de freinage par un élément récepteur d'air de freinage (210) à proximité de l'installation de freinage et le transport du flux de celui-ci vers un environnement distal de l'installation de freinage par un conduit d'air qui peut être raccordé de manière fluidique à l'installation de freinage,
- la purification de l'air de freinage dans au moins un dispositif de flux d'air de freinage (220, 500) à l'aide d'une combinaison d'un élément séparateur à cyclone, d'un élément collecteur et d'un élément filtrant, lesdits éléments étant disposés le long d'une séquence d'écoulement descendant dans un boîtier de dispositif, dans lequel le dispositif de flux d'air de freinage sépare et collecte des particules de poussière du flux d'air de freinage et filtre le flux d'air de freinage par la suite.

13. Système d'air de freinage selon l'une quelconque des revendications précédentes 1 à 7, **caractérisé en ce que** le boîtier de dispositif (501) dans un arrangement séquentiel de bas en haut est formé par l'élément collecteur (510), l'élément séparateur à cyclone (530), l'élément filtrant (550) et un couvercle (570), dans lequel le couvercle et l'élément collecteur sont détachables du boîtier **en ce que** le couvercle et l'élément collecteur sont adaptés pour le réassemblage.

14. Système d'air de freinage selon l'une quelconque des revendications précédentes 1 à 7, **caractérisé en ce que** le boîtier de dispositif (501) du dispositif de flux d'air de freinage (220, 500) comprend en outre :
- une interface d'entrée (581) en liaison fluidique avec l'élément séparateur à cyclone et/ou une interface de sortie (582) en liaison fluidique avec l'élément filtrant, dans lequel le volume intermédiaire (541) est en liaison fluidique avec l'interface de sortie (582),
- un ensemble de montage (560) pour attacher le boîtier à un véhicule.
